# EUROPEAN PATENT APPLICATION

(11) **EP 2 587 641 A2**
(43) Date of publication of application: **01.05.2013**
(21) Application number: 12190095.5
(22) Date of filing: 26.10.2012
(51) Int. Cl.: H02K 9/22

(54) **Motor having heat transfer sheet**

(30) Priority: 27.10.2011 JP 2011235853
(71) Applicant: Kobelco Construction Machinery Co., Ltd., Hiroshima 731-5161 (JP); KABUSHIKI KAISHA KOBE SEIKO SHO, Kobe-shi, Hyogo 651-8585 (JP)
(72) Inventor: Nakazumi, Akira, Hiroshima-shi, Hiroshima 731-5161 (JP); Saiki, Seiji, Hiroshima-shi, Hiroshima 731-5161 (JP); Koiwai, Kazushige, Hiroshima-shi, Hiroshima 731-5161 (JP); Tsutsui, Akira, Kobe-shi, Hyogo 651-2271 (JP)
(74) Representative: TBK

(57) **Abstract**

Provided is a motor including: a motor shaft; a rotor rotating about the motor shaft; a stator disposed around the rotor; a casing accommodating the rotor and the stator; a cover covering a heat radiation target end surface of the stator while supporting one end portion of the motor shaft; a heat transfer layer having an electric insulation property and interposed between the stator and the casing to transfer heat from the stator to the casing; and a heat transfer sheet provided separately to the heat transfer layer to transfer heat generated in the stator to the casing, wherein the heat transfer sheet has an electric insulation property and a heat transfer property and is interposed between the heat radiation target end surface of the stator and the cover so as to contact the heat radiation target end surface and the cover.

## Description

### Background of the Invention

### Field of the Invention

The present invention relates to a motor, for example, used as a slewing drive source of an excavator.

### Description of the Background Art

There is known a typical motor including a motor shaft, a rotor that rotates about the motor shaft, a stator that includes a stator core and a stator coil and is disposed around the rotor, and a casing with a cover, the casing for accommodating the rotor and the stator. This type of motor, when used as, for example, a slewing motor for an excavator, is disposed in an upper portion slewing body of the excavator in such a vertical attitude that the motor shaft vertically extends. In this case, the motor generates heat during an operation due to iron loss in the stator core and copper loss in the stator coil. For the reason, the motor is given a cooling function, specifically a heat radiation ability, to dissipate the resulting stator heat to the casing or into outside air.

Note that the "motor" described in this specification intends to include a power generator and a generator motor that operate on identical principles to a motor.

Japanese Patent Application Publication No. (H) 10-290543 discloses a technique for providing the type of motor with a cooling function (a heat radiation function). This technique adopts a metallic heat transfer spacer to be inserted into a gap between an axial end surface of a coil end of the stator coil forming the stator and an axial end wall of the casing. The heat transfer spacer has a wave-shaped cross-section to give the heat transfer spacer elasticity and serves to transfer stator heat which is heat generated in the stator, specifically core heat generated in the stator core and coil heat generated in the stator coil, to the casing. Furthermore, there is charged a synthetic resin having both a thermal conduction property and an electric insulation property into a gap between respective surfaces of the coil end and the heat transfer spacer and an inner surface of a peripheral wall of the casing, the synthetic resin also transferring the stator heat to the casing. Meanwhile, the casing is provided with a cooling passage through which a coolant such as water is flowed in an interior of the casing, the cooling passage improving a heat radiation effect.

This conventional technique, however, has the following disadvantages in the heat radiation property and an axial length of the motor.

### (I) Heat radiation property

The stator heat can be transferred only directly to the casing through the heat transfer spacer and the resin layer, that is, through only a single heat transfer path from the stator to the casing, which seriously limits an overall heat transfer area, that is, a heat radiation area, and involves a poor heat radiation efficiency into the outside air. Furthermore, the contact of the heat transfer spacer having the wave-shaped cross-section with the casing is basically line contact or point contact, thus having only poor heat transfer efficiency. In addition, the resin layer has a part formed between an outer peripheral surface of the heat transfer spacer and an inner peripheral surface of the casing, the part reducing the elasticity of the heat transfer spacer to thereby prevent the heat transfer spacer from close contact with the casing. This also involves a reduction in a heat transfer effect.

### (II) Axial length of motor

Interposing the heat transfer spacer between the axial direction end portion wall of the casing and the coil end means to give a heat transfer wall of constant thickness to the axial end portion of the casing, and the presence of the heat transfer wall increases an overall axial dimension, namely, the axial length, of the motor by the thickness of the heat transfer wall. In addition, the heat transfer spacer must have a great thickness enough to accommodate variation in an axial dimension of the gap into which the heat transfer spacer is inserted, which forces the axial length of the motor to be greater. The motor thus given a large axial length is hard to use as a slewing motor for an excavator, in which the slewing motor must be vertically disposed in a vertically limited space.

### Summary of the Invention

An object of the present invention is to provide a motor including a stator which has an improved heat radiation property while having a suppressed axial length.

Provided is a motor which includes: a motor shaft; a rotor that rotates about the motor shaft; a stator disposed around the rotor; a casing that accommodates the rotor and the stator; a cover that covers a heat radiation target end surface which is one of opposite axial end surfaces of the stator while supporting one end portion of the motor shaft; a heat transfer layer having an electric insulation property and interposed between the stator and the casing to transfer heat from the stator to the casing; and a heat transfer sheet provided separately to the heat transfer layer to transfer heat generated in the stator to the casing, the heat transfer sheet having an electric insulation property and a heat transfer property and being interposed between the heat radiation target end surface of the stator and the cover so as to contact the heat radiation target end surface and the cover.

### Brief Description of the Drawings

Fig. 1 is a sectional front view showing half of a motor according to a first embodiment of the present invention;
Fig. 2 is an enlarged sectional view of a portion II in Fig. 1;
Fig. 3 is a sectional front view showing half of a motor according to a second embodiment of the present invention; and
Fig. 4 is a sectional front view showing half of a motor according to a third embodiment of the present invention.

### Description of the Preferred Embodiments

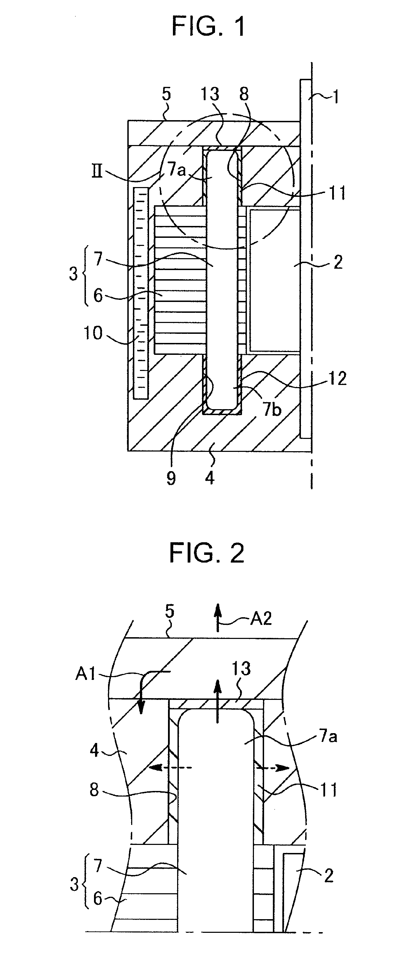

There will be described below first to third embodiments of the present invention with reference to Figs. 1 to 4, of which Figs. 1, 3, and 4 show only half (a left half portion in the drawings) of a motor cut along a central shaft serving as a rotary body thereof, while the structure of the remaining half omitted from the drawings is identical to the half shown in the drawings.

Commonly to the above embodiments, there is disclosed a motor including a motor shaft 1, a rotor 2 that rotates about the motor shaft 1, a stator 3 disposed around the rotor 2, a casing 4 accommodating the rotor 2 and the stator 3, and a cover 5 attached to a specific end surface of opposite axial end surfaces of the casing 4, the motor disposed in such a vertical attitude that the motor shaft 1 vertically extends like a slewing motor for an excavator. In this specification, respective directions are indicated on the basis of the vertical attitude: specifically, axial and radial directions of the motor can be described as respective vertical and lateral directions.

Commonly to all of the above embodiments, the cover 5 is attached to an upper end surface of the casing 4, namely, the specific end surface, by a bolt not shown in the drawings, to rotatably support an upper portion of the motor shaft 1, that is, an end portion on the specific end surface side, of opposite end portions of the motor shaft 1, through a bearing not shown in the drawings. On the other hand, a lower portion of the motor shaft 1, that is, an end portion on an opposite side to the end portion on the specific end surface side, is rotatably supported by a lower portion of the casing 4 through a bearing not shown in the drawings.

Similarly to well-known stators, the stator 3 includes a stator core 6 and a stator coil 7 vertically wound around the stator core 6. The stator coil 7 has a first coil end 7a and a second coil end 7b corresponding to respective upper and lower end portions of the stator coil 7, the first and second coil ends 7a and 7b vertically and oppositely projecting beyond an upper end and a lower end of the stator core 6, respectively. The casing 4 includes a first coil end accommodating portion 8 and a second coil end accommodating portion 9 for accommodating the first coil end 7a and the second coil end 7b, respectively, and the coil ends 7a, 7b are inserted into the coil end accommodating portions 8, 9, respectively.

The casing 4 is provided with a cooling passage 10 through which a coolant such as water is flowed, in an outer peripheral portion of the casing 4. The cooling passage 10 forms a part of a circulation flow passage, along which the coolant is flowed by a pump not shown in the drawings so as to circulate via a tank to thereby cool the casing 4.

Next will be described each of the embodiments sequentially.

As shown in Figs. 1 and 2, in the first embodiment of the present invention, a first gap is formed between radially inner and outer surfaces of the first coil end 7a and respective surfaces, of the casing 4, opposing the side surfaces, i.e. respective inner surfaces of the first coil end accommodating portion 8. Similarly, a second gap is formed between a lower end surface constituted by an end surface of the second coil end 7b and radially inner and outer surfaces of the second coil end 7b and respective surfaces, of the casing 4, opposing the end surface and the side surfaces, i.e. respective inner surfaces of the second coil end accommodating portion 9. There is charged a synthetic resin having both an electric insulation property and a heat transfer property, for example, unsaturated polyester, into the first and second gaps, thereby forming a first resin layer 11 and a second resin layer 12 serving as heat transfer layers around the first and second coil ends 7a, 7b. The first and second resin layers 11, 12 transfer coil heat generated in the stator coil 7, to the casing 4.

On the other hand, both of respective axial end surfaces each constituted by upper and lower end surfaces and an outer peripheral surface of the stator core 6 make direct contact with the casing 4. The core heat generated in the stator core 6 is therefore permitted to be directly transferred to the casing 4 through a contact surface between the stator core 6 and the casing 4.

Thus, in the motor, as a heat transfer path for transferring a stator heat, that is, the coil heat and the core heat, to the casing 4, formed is a first path through which stator heat is directly transferred to the casing 4 as shown by dotted line arrows in Fig. 2.

The motor further includes a heat transfer sheet 13 to form a second path serving as another heat transfer path for the stator heat. The heat transfer sheet 13 is formed, as a thin ring-shaped sheet body, of a material possessing elasticity in addition to electric insulation and heat transfer properties, for example, silicone rubber, and is interposed between an upper end surface, i.e. an end surface of the first coil end 7a, and the cover 5. The heat transfer sheet 13 has a thickness and a heat-transfer coefficient which are not limited and suitably selected: for example, desirable is a sheet having a thickness of 2 to 10mm and a heat-transfer coefficient of appropriately 1.5W/mK. The heat transfer sheet 13A is brought into elastically close and surface contact with a back surface of the cover 5 (a lower surface in Fig. 1) and an end surface of the first coil end 7a, which is a heat transfer target end surface of opposite axial end surfaces of the stator 3, by fastening force of the bolt for attaching the cover 5 and an elastic force of the heat transfer sheet 13 itself, thereby transferring the coil heat to the cover 5. Thus, the second path, along which the heat is transferred from the heat transfer sheet 13 via the cover 5 to the casing 4 (as shown by an arrow A1) and the outside air (as shown by an arrow A2), as shown by solid line arrows in Fig. 2, is formed, allowing the heat transferred to the casing 4 to be dissipated efficiently.

As described above, in the motor according to the first embodiment, as heat transfer paths from the stator 3 to the casing 4 are formed not only the first path from the stator 3 to the casing 4 via the first and second resin layers 11, 12 but also the second path from the stator 3 to the casing 4 via the heat transfer sheet 13 and the cover 5, enabling the stator heat to be effectively dissipated from the casing 4 along the first and second paths. Thus, both of an increase in a heat radiation area of the entire motor and promotion of heat radiation into the outside air can be achieved, enabling a heat radiation efficiency of the stator 3 to be enhanced in comparison with the background art.

Furthermore, sandwiching the heat transfer sheet 13, which is just a sheet body, between the axial end surface of the first coil end 7a of the stator 3 and the cover 5 contributes to a reduced axial length of the entire motor, namely, the whole axial length of the motor, in comparison with the case of interposing a heat transfer spacer between the axial direction end portion wall of the casing and the coil end, in other words, interposing the casing end portion wall between the heat transfer spacer and the cover so as to hinder the heat transfer spacer and the cover from direct contact with each other, like the above-mentioned background art. This allows the motor to be easily applied to one, such as a slewing motor for an excavator, whose axial length is limited, and to be easily installed.

Furthermore, the heat transfer sheet 13 can be incorporated simply by being sandwiched between the first coil end 7a of the stator 3 and the cover 5 upon the attachment of the cover 5 to the casing 4, with no requirement of complicated processing or incorporating operations on either the stator side or the cover side. This makes it possible to simplify an overall structure of the motor and reduce cost and allows the motor to be easily assembled.

In addition, the first embodiment includes the following advantageous features.
(i) The heat transfer sheet 13, which is a sheet body possessing elasticity which allows the heat transfer sheet 13 to make close surface contact with both of the first coil end 7a of the stator 3 and the cover 5, can enhance the heat transfer effect through the second path.
(ii) The heat transfer sheet 13 can be sandwiched between the cover 5 and the first coil end 7a by utilization of the elastic force of the sheet 13 and the fastening force for fastening the stator 3 to the cover 5. This allows the heat transfer sheet 13 to have a small thickness, in comparison with the background art impossible to utilize such a fastening force to retain the heat transfer spacer, thereby enabling the entire motor to have further reduced axial length.
(iii) The heat transfer sheet 13 transfers heat from the coil 7 remarkably generating heat to the casing 4 through both of the first and second paths to dissipate it into the outside air while interposed between the first coil end 7a and the cover 5, thus enabling the heat radiation effect to be further improved.
(iv) The cooling passage 10 provided in the casing 4 allows the coolant such as water to be flowed to efficiently absorb the stator heat transferred to the casing 4 through the two paths. Besides, even in the case of the motor installed in an environment where the casing 4 itself is warmed by exterior heat from heat-producing devices, such as a motor in a construction machine, for example, an excavator, where an engine or a hydraulic pump is disposed around the motor, the coolant is capable of keeping the temperature of the casing 4 be low, thus enhancing the stator heat absorption efficiency of the casing 4.

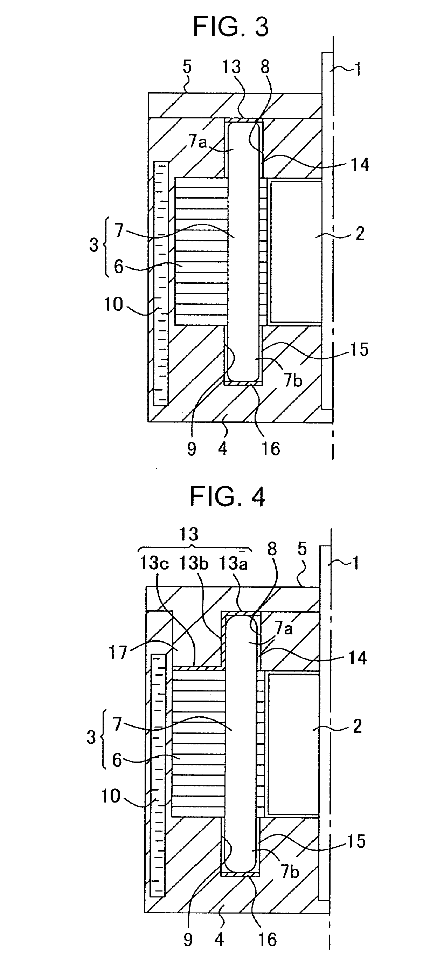

Next will be described a second embodiment of the present invention with reference to Fig. 3. The second embodiment differs from the first embodiment only in the following point. In the first embodiment, the resin layers 11, 12 are formed as heat transfer layers in the first and second gaps, respectively, the first gap interposed between the opposite radial side surfaces of the first coil end 7a and respective inner surfaces of the casing 4 opposite thereto and the second gap interposed between the end surface of the second coil end 7b constituted by the lower end surface and the opposite radial side surfaces of the second coil end 7b and the inner surfaces of the casing 4 opposite thereto, whereas, in the second embodiment, no synthetic resin is charged into the first and second gaps, but a first air layer 14 and a second air layer 15 are formed therein as heat transfer layers, respectively. Besides, in addition to the heat transfer sheet 13 interposed between the upper end surface, i.e., one of the end surface of the first coil end 7a, and the cover 5, there is interposed a heat transfer sheet 16 having identical characteristics to the upper side heat transfer sheet 13, namely an electric insulation property, a heat transfer property, and elasticity, between the lower end surface, i.e., one of the end surface of the second coil end 7b, and the casing 4.

Also in the second embodiment, similarly to the first embodiment, both of the first and second paths are formed as the heat radiation paths for the stator heat, enabling basic effects of realizing highly efficient heat radiation to be obtained with no need for increasing the axial length. Besides, the heat transfer sheet 16 on the lower side, i.e. the second oil end 7b side, is also capable of keeping its elastic close surface contact with the casing 4 by its own elastic force and the fastening force for fastening the cover 5, the fastening force transmitted thereto from above through the coil 7. Moreover, in contrast to the first embodiment, the first path can be formed simply with no need for a resin charging operation, thus enabling a cost to be further reduced.

Next will be described a third embodiment of the present invention with reference to Fig. 4.

A motor according to the third embodiment, while based on the configuration of the motor according to the second embodiment, further includes the following configuration. The cover 5 includes a lower surface, i.e., an inner surface, which is provided with a projecting portion 17 projecting downward toward an upper end surface of the stator core 6, i.e. one end surface at a cover side, and the projecting portion 17 is fitted into an outer peripheral wall of the casing 4 at an inner side thereof to form the first coil end accommodating portion 8 together with a central part of the casing 4. The heat transfer sheet 13 on the upper side, i.e., on the first coil end side, includes a horizontal first part 13a, a second part 13b extending from a radially outer end portion of the first part 13a toward the inner side of the casing 4 in a vertical direction, that is, a direction parallel to the axial direction of the motor, and a third part 13c further extending radially outward from an end portion of the second part 13b on an opposite side to the first part 13a, the parts 13a, 13b and 13c being integrally formed. The first part 13a is interposed between the end surface of the first coil end 7a and the cover 5; the second part 13b is interposed between the radially outer surface of the first coil end 7a and a right side surface of the projecting portion 17; and the third part 13c is interposed between the upper end surface, that is, an end surface of the stator core 6 at the cover side, and a lower end surface of the projecting portion 17. Meanwhile, an air layer 14 serving as a heat transfer layer is provided between the radial direction inner surface of the first coil end 7a and an opposing surface of the casing 4, i.e., a surface of the first coil end accommodating portion 8.

The thus shaped heat transfer sheet 13 dissipates the heat generated in the stator 3 to the cover 5 over a wide surface area range including the stator core 6, thereby enabling the heat radiation effect to be further improved.

The present invention is not limited to the embodiments described above but can include, for example, the following embodiments.
(1) In the third embodiment shown in Fig. 4, the air layer 14 is permitted to be replaced with a resin layer.
(2) In the second and third embodiments, it is also possible that the heat transfer sheet 16 on the lower side, i.e. the second coil end 7b side, is omitted while an air layer or a resin layer is formed as a heat transfer layer between the second coil end 7b and the opposing surface of the casing 4.
(3) While the cover 5 in the above embodiments is attached only to the upper end surface, that is, the specific end surface of the casing 4, the present invention also permits a pair of covers to be attached to respective opposite axial end surfaces of the casing. In this case, the heat transfer sheet may be provided between each of both of the covers and the stator, or may be provided between the stator and only one of the covers, specifically, the cover on the specific end surface side.
(4) The motor according to the present invention is not limited to being disposed in a lateral attitude, but the present invention may be also applied to a motor disposed in a horizontal attitude. Besides, the "motor" cited in the present invention intends to widely include devices that operate on substantially identical principles to a motor, for example, a power generator or a generator motor that operate on identical principles.

As described above, the present invention provides a motor including a stator which has an improved heat radiation property while having a suppressed axial length. Provided is a motor which includes: a motor shaft; a rotor that rotates about the motor shaft; a stator disposed around the rotor; a casing that accommodates the rotor and the stator; a cover that covers a heat radiation target end surface which is one of opposite axial end surfaces of the stator while supporting one end portion of the motor shaft; a heat transfer layer having an electric insulation property and interposed between the stator and the casing to transfer heat from the stator to the casing; and a heat transfer sheet provided separately to the heat transfer layer to transfer heat generated in the stator to the casing, the heat transfer sheet having an electric insulation property and a heat transfer property and being interposed between the heat radiation target end surface of the stator and the cover so as to contact the heat radiation target end surface and the cover.

In this motor, as heat transfer paths from the stator, formed are not only a first path from the stator to the casing via the heat transfer layer but also a second path from the stator to the casing and the outside air via the heat transfer sheet and the cover are formed, both of the paths allowing the heat to be discharged. This enables the whole heat radiation area to be increased and activates the heat dissipation into the outside air, thereby improving the heat radiation efficiency of the stator in comparison with the background art.

Besides, the structure of sandwiching the heat transfer sheet, which is just a sheet body, between the heat transfer target end surface, i.e., the axial end surface, of the stator and the cover allows the entire motor to have a reduced axial length in comparison with the structure according to the background art, wherein the heat transfer spacer is interposed between the axial end portion wall of the casing and the coil end ,that is, a casing end portion wall is interposed between the heat transfer spacer and the cover so as to hinder the heat transfer spacer from direct contact with the cover. This allows the motor to be applied to a motor whose axial length is limited, such as a slewing motor for a construction machine, and to be easily incorporated therein. Furthermore, the heat transfer sheet only has to be sandwiched between the stator and the cover upon the attachment of the cover, involving no need for complicated processing or incorporating operations on either the stator side or the cover side. This makes it possible to simplify the structure of the motor and reduce cost and enables the motor to be easily assembled.

The heat transfer sheet is preferably a sheet body possessing elasticity and makes close surface contact with the stator and the cover by the elasticity thereof. The elastic surface contact of the heat transfer sheet with the stator and the cover enhances the heat radiation effect of the second path and enables the motor to have a further reduced axial length. The above-mentioned background art adopts a heat transfer spacer to be inserted into the gap between the axial end portion wall of the casing and the coil end of the stator and the insertion requires the heat transfer spacer to have a great thickness enough to accommodate the size of the gap, thus involving a further increase in the axial length of the motor; in contrast to this, sandwiching the heat transfer sheet, as described above, between the stator and the cover by utilization of its own elastic force and the fastening force for fastening the cover to the stator allows the heat transfer sheet to have a further reduced thickness to thereby further reduce the axial length of the motor.

In the case of the stator including a stator core and a stator coil wound around the stator core axially thereof, it is preferable that the heat transfer sheet is interposed between the cover and an end surface of a coil end which is an axial end of the stator coil, the end surface corresponding to a n axial end portion of the stator coil, which is an end surface corresponding to the heat transfer target end surface. The thus disposed heat transfer sheet is capable of efficiently transferring heat from the stator coil remarkably generating heat to the casing and dissipating the heat into the outside air, thereby enabling the heat radiation effect to be further improved.

More preferable is that the cover has an inner surface provided with a projecting portion projecting toward the end surface of the coil end, which is the heat radiation target end surface of the stator core, and that the heat transfer sheet includes: a first part interposed between the end surface of the coil end and the cover; a second part interposed between a radially outer surface of the coil end and a side surface of the projecting portion, and a third part interposed between an axial end surface of the stator core and an end surface of the projecting portion, the first part, the second part and the third part being integrally formed. The thus formed heat transfer sheet is able to transfer the heat of the stator to the cover over a wide surface area range including the stator core, thereby enabling the heat radiation effect to be further improved.

Meanwhile, the heat transfer layer preferably includes a part formed of a synthetic resin charged into a gap between a side surface of the coil end of the stator coil and the casing. This heat radiation layer ensures the close contact of the coil end with the casing to thereby enable the heat radiation effect through the first path to be improved.

Alternatively, the heat transfer layer may include an air layer interposed between a side surface of the coil end of the stator coil and the casing. With the air layer, the first path can be formed in a simple configuration requiring no charge of synthetic resin.

Besides, the casing is preferable provided with a cooling passage through which a coolant such as water is flowed in an interior of the casing. The cooling passage allows the flowed coolant to efficiently absorb the heat of the stator. Moreover, even in the case of the motor installed in an environment, such as a motor installed in a construction machine, for example, an excavator, where the casing itself is warmed by exterior heat from heat-producing devices, namely, an engine or a hydraulic pump, the coolant is capable of keeping the temperature of the casing be low, thus enhancing the stator heat absorption efficiency of the casing.

This application is based on Japanese Patent application No. 2011-235853 filed in Japan Patent Office on October 27, 2011, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

Provided is a motor including: a motor shaft; a rotor rotating about the motor shaft; a stator disposed around the rotor; a casing accommodating the rotor and the stator; a cover covering a heat radiation target end surface of the stator while supporting one end portion of the motor shaft; a heat transfer layer having an electric insulation property and interposed between the stator and the casing to transfer heat from the stator to the casing; and a heat transfer sheet provided separately to the heat transfer layer to transfer heat generated in the stator to the casing, wherein the heat transfer sheet has an electric insulation property and a heat transfer property and is interposed between the heat radiation target end surface of the stator and the cover so as to contact the heat radiation target end surface and the cover.

## Claims

1. A motor comprising:
a motor shaft;
a rotor that rotates about the motor shaft;
a stator disposed around the rotor;
a casing that accommodates the rotor and the stator;
a cover that covers a heat radiation target end surface which is one of opposite axial end surfaces of the stator while supporting one end portion of the motor shaft;
a heat transfer layer that has an electric insulation property and is interposed between the stator and the casing to transfer heat from the stator to the casing; and
a heat transfer sheet provided separately to the heat transfer layer to transfer heat generated in the stator to the casing, the heat transfer sheet having an electric insulation property and a heat transfer property and being interposed between the heat radiation target end surface of the stator and the cover so as to contact the heat radiation target end surface and the cover.

2. The motor according to claim 1, wherein the heat transfer sheet is a sheet body possessing elasticity and makes close surface contact with the stator and the cover by the elasticity.

3. The motor according to claim 1, wherein the stator includes a stator core and a stator coil wound around the stator core axially thereof, and the heat transfer sheet is interposed between the cover and an end surface of a coil end which is an axial end portion of the stator coil, the end surface corresponding to the heat transfer target end surface.

4. The motor according to claim 3, wherein the cover includes an inner surface provided with a projecting portion projecting toward the heat radiation target end surface of the stator core, and the heat transfer sheet includes a first part interposed between the end surface of the coil end and the cover, a second part interposed between a radially outer surface of the coil end and a side surface of the projecting portion, and a third part interposed between an axial end surface of the stator core and an end surface of the projecting portion, the first part, the second part and the third part being integrally formed.

5. The motor according to claim 3, wherein the heat transfer layer includes a part formed of a synthetic resin charged into a gap between a side surface of the coil end of the stator coil and the casing.

6. The motor according to claim 3, wherein the heat transfer layer includes an air layer interposed between a side surface of the coil end of the stator coil and the casing.

7. The motor according to claim 1, wherein the casing is provided with a cooling passage through which a coolant is flowed, in an interior of the casing.
